# EUROPEAN PATENT APPLICATION

(11) **EP 4 660 832 A1**
(43) Date of publication of application: **10.12.2025**
(21) Application number: 24769944.0
(22) Date of filing: 13.03.2024
(51) Int. Cl.: G06F 16/27

(54) **DATA FORWARDING METHOD AND APPARATUS, AND ELECTRONIC DEVICE AND STORAGE MEDIUM**

(30) Priority: 15.03.2023 CN 202310268779
(71) Applicant: Chery Automobile Co., Ltd., Wuhu, Anhui 241006 (CN); Wuhu Lion Automotive Technologies Co., Ltd., Wuhu, Anhui 241006 (CN)
(72) Inventor: YAN, Shuwei, Wuhu, Anhui 241006 (CN)
(74) Representative: Yang, Shu
(86) International application number: PCT/CN2024/081294
(87) International publication number: WO 2024/188253

(57) **Abstract**

The present application relates to a data forwarding method and apparatus, and an electronic device and a storage medium. The method comprises: acquiring a first vehicle information list to determine first vehicles, which have data processing requirements; acquiring a forwarding task list to determine an execution condition of a forwarding task of each first vehicle, so as to screen vehicle information in the first vehicle information list; removing vehicle information of vehicles, which have executed the forwarding task, so as to obtain a second vehicle information list; then, executing a forwarding task of each second vehicle on the basis of the second vehicle information list, and in combination with an annular queue, forwarding driving data of each second vehicle to a data processing platform by means of multithread asynchronous forwarding, such that the data processing platform performs subsequent processing on the driving data; and updating the execution condition of each forwarding task in the forwarding task list. In this way, extracted driving data can be efficiently accessed, and it is ensured that the driving data is forwarded to a data processing platform without being repeated and omitted.

## Description

This application is based on and claims priority to Chinese Patent Application No. 202310268779.4, filed on March 15, 2023, entitled "DATA EXTRACTION ASYNCHRONOUS FORWARDING METHOD AND DEVICE, ELECTRONIC EQUIPMENT AND STORAGE MEDIUM," the disclosure of which is herein incorporated by reference in its entirety.

### TECHNICAL FIELD

The present disclosure relates to the technical field of Internet of vehicles, particularly to a method for forwarding data, an apparatus for forwarding data, an electronic device, and a storage medium.

### BACKGROUND

With the rapid development of the vehicle industry, the Internet of vehicles is being more and more widely applied. The data generated by the Internet of vehicles gets more and more, resulting in an urgent need to synchronize driving data stored in a database of the Internet of vehicles to a data processing platform and to perform data processing and data analysis on the driving data using the data processing platform.

In the related arts, the HBase database is used to store the driving data of the vehicles, and Kettle (a data conversion tool) is applied to extract data from the HBase database, parse the data, and forward the data to the data processing platform, such that the data processing platform can perform subsequent processing on the received data.

### SUMMARY

The present disclosure provides a method for forwarding data, an apparatus for forwarding data, an electronic device, and a storage medium. The technical solutions are as follows.

According to a first aspect of the present disclosure, a method for forwarding data is provided, the method including: acquiring a list of first vehicle information, wherein the list of first vehicle information includes vehicle information of a plurality of first vehicles, wherein the vehicle information of the plurality of first vehicles indicates vehicles having a data processing requirement, the data processing requirement referring to processing driving data of the plurality of first vehicles via a data processing platform; acquiring a list of forwarding tasks, wherein the list of forwarding tasks includes an execution status of a forwarding task of each of the plurality of first vehicles, wherein the forwarding task of the first vehicle refers to forwarding driving data of the first vehicle from a database to the data processing platform, the database being configured to store driving data uploaded by vehicles via an Internet of vehicles; acquiring a list of second vehicle information by filtering, based on the list of forwarding tasks, the vehicle information in the list of first vehicle information, wherein the list of second vehicle information includes vehicle information of one or more second vehicles, wherein the vehicle information of the one or more second vehicles indicates a vehicle whose forwarding task is not executed in the plurality of first vehicles; and executing, based on the list of second vehicle information, a forwarding task of each of the one or more second vehicles and updating an execution status of the forwarding task of each of the one or more second vehicles in the list of forwarding tasks, wherein executing forwarding task of each of the one or more second vehicles includes: storing driving data of the one or more second vehicles from the database into a circular queue, and forwarding the driving data from the circular queue to the data processing platform via multithreaded asynchronous forwarding.

In some embodiments, the execution status of the forwarding task includes an execution progress of the forwarding task; and the method further includes: in a case that the list of forwarding tasks includes a first forwarding task, continuing to execute the first forwarding task based on an execution progress of the first forwarding task in the list of forwarding tasks until the first forwarding task is successfully executed, wherein the first forwarding task refers to a forwarding task that has experienced an execution interruption.

In some embodiments, the execution status of the forwarding task includes a cause of an anomalous execution of the forwarding task, and the method further includes: in a case that the list of forwarding tasks includes a second forwarding task, compensating for the second forwarding task based on a cause of an anomalous execution of the second forwarding task in the list of forwarding tasks, wherein the second forwarding task refers to a forwarding task that has experienced an anomalous execution.

In some embodiments, the method further includes: receiving a first scheduled task, wherein the first scheduled task instructs to execute the forwarding task during a first time period, the first time period referring to a time period in which a usage frequency of the driving data is less than or equal to a first threshold; and receiving a second scheduled task, wherein the second scheduled task instructs not to execute the forwarding task during a second time period, the second time period referring to a time period in which the usage frequency of the driving data is greater than a second threshold.

In some embodiments, the execution status of the forwarding task includes at least one: vehicle information of a vehicle corresponding to the forwarding task, a task type of the forwarding task, an execution status, an execution duration, an interruption time, an execution progress, or a cause of an anomalous execution.

According to a second aspect of the present disclosure, an apparatus for forwarding data is provided, the apparatus including: a first acquiring module, configured to acquire a list of first vehicle information, wherein the list of first vehicle information includes vehicle information of a plurality of first vehicles, wherein the vehicle information of the plurality of first vehicles indicates vehicles having a data processing requirement, the data processing requirement referring to processing driving data of the plurality of first vehicles via a data processing platform; a second acquiring module, configured to acquire a list of forwarding tasks, wherein the list of forwarding tasks includes an execution status of a forwarding task of each of the plurality of first vehicles, wherein the forwarding task of the first vehicle refers to forwarding driving data of the first vehicle from a database to the data processing platform, the database being configured to store driving data uploaded by vehicles via an Internet of vehicles; a filtering module, configured to acquire a list of second vehicle information by filtering, based on the list of forwarding tasks, the vehicle information in the list of first vehicle information, wherein the list of second vehicle information includes vehicle information of one or more second vehicles, wherein the vehicle information of the one or more second vehicles indicates a vehicle whose forwarding task is not executed in the plurality of first vehicles; and a task executing module, configured to execute, based on the list of second vehicle information, a forwarding task of each of the one or more second vehicles and update an execution status of the forwarding task of each of the one or more second vehicles in the list of forwarding tasks, wherein executing forwarding task of each of the one or more second vehicles includes: storing driving data of the one or more second vehicles from the database into a circular queue, and forwarding the driving data from the circular queue to the data processing platform via multithreaded asynchronous forwarding.

In some embodiments, the execution status of the forwarding task includes an execution progress of the forwarding task, and the task executing module is further configured to: in a case that the list of forwarding tasks includes a first forwarding task, continue to execute the first forwarding task based on an execution progress of the first forwarding task in the list of forwarding tasks until the first forwarding task is successfully executed, wherein the first forwarding task refers to a forwarding task that has experienced an execution interruption.

In some embodiments, the execution status of the forwarding task includes a cause of an anomalous execution of the forwarding task, and the task executing module is further configured to: in a case that the list of forwarding tasks includes a second forwarding task, compensate for the second forwarding task based on a cause of an anomalous execution of the second forwarding task in the list of forwarding tasks, wherein the second forwarding task refers to a forwarding task that has experienced an anomalous execution.

In some embodiments, the apparatus further includes a receiving module, configured to perform at least one of: receiving a first scheduled task, wherein the first scheduled task instructs to execute the forwarding task during a first time period, the first time period referring to a time period in which a usage frequency of the driving data is less than or equal to a first threshold; and receiving a second scheduled task, wherein the second scheduled task instructs not to execute the forwarding task during a second time period, the second time period referring to a time period in which the usage frequency of the driving data is greater than a second threshold.

In some embodiments, the execution status of the forwarding task includes at least one: vehicle information of a vehicle corresponding to the forwarding task, a task type of the forwarding task, an execution status, an execution duration, an interruption time, an execution progress, or a cause of an anomalous execution.

According to a third aspect of the present disclosure, an electronic device is provided. The electronic device includes a memory, a processor, and a computer program stored on the memory and runnable on the processor, wherein the processor, when running the program, is caused to perform the method for forwarding data as described in the above embodiments.

According to a fourth aspect of the present disclosure, a computer-readable storage medium is provided. The storage medium stores a computer program, wherein the program, when run by a processor, causes the processor to perform the method for forwarding data as described in the above embodiments.

That is, first vehicles having a data processing requirement are determined by acquiring a list of first vehicle information, and an execution status of a forwarding task of each of the first vehicles is determined by acquiring a list of forwarding tasks, such that a list of second vehicle information is acquired by filtering the vehicle information in the list of first vehicle information, removing vehicle information of a forwarding task that has been executed, and maintaining the vehicle information of a forwarding task that has not been executed. In other words, one or more second vehicles whose forwarding tasks are to be executed are determined. Subsequently, a forwarding task of each of the one or more second vehicles is executed based on the list of second vehicle information, and vehicle data of each second vehicle is forwarded to a data processing platform (such as a cloud platform) via multithreaded asynchronous forwarding in conjunction with a circular queue, such that the data processing platform performs the subsequent processing on the vehicle data. Further, the execution status of the forwarding task in the list of forwarding tasks is updated. In this way, the extracted driving data are stored and acquired efficiently, and the driving data are ensured to be forwarded to the data processing platform without repetitions or omissions.

The additional aspects and advantages of the present disclosure are described in the following description, partly become clear based on the following description, or are understandable through the practice of the present disclosure.

### BRIEF DESCRIPTION OF DRAWINGS

The above and/or additional aspects and advantages of the present disclosure will become clearer and easier to understand based on the following description of the embodiments in conjunction with the drawings, wherein:
FIG. 1 is a flowchart of a method for forwarding data according to some embodiments of the present disclosure;
FIG. 2 is a flowchart of another method for forwarding data according to some embodiments of the present disclosure;
FIG. 3 is a block diagram of an apparatus for forwarding data according to some embodiments of the present disclosure; and
FIG. 4 is a structural diagram of an electronic device according to some embodiments of the present disclosure.

### DETAILED DESCRIPTION

The following provides a detailed description of the embodiments of the present disclosure. Some examples of these embodiments are depicted in the accompanying drawings, wherein identical or similar reference numerals consistently denote identical or similar elements or elements with identical or similar functions throughout. The embodiments described hereinafter with reference to the accompanying drawings are illustrative, aiming to interpret the present disclosure, and should not be construed as a limitation to the present disclosure.

It should be noted that information such as vehicle information and the list of forwarding tasks involved in the embodiments of the present disclosure is acquired with the full knowledge and authorization of the user and all relevant parties. Moreover, the collection, utilization, and processing of relevant data must comply with the relevant laws, regulations, and standards of the relevant countries and regions.

The following describes a method for forwarding data, an apparatus for forwarding data, an electronic device, and a storage medium provided by the embodiments of the present disclosure with reference to the accompanying drawings. In the related art, when forwarding data from the HBase database to the data processing platform using the tool of Kettle, problems such as duplicate data extraction, data loss, complex processes, low forwarding efficiency, and the inability to resume from a breakpoint exist. In view of the above, the present disclosure provides a method for forwarding data. In this method, first vehicles having a data processing requirement are determined by acquiring a list of first vehicle information, and an execution status of a forwarding task of each of the first vehicles is determined by acquiring a list of forwarding tasks, such that a list of second vehicle information is acquired by filtering the vehicle information in the list of first vehicle information, removing vehicle information of a forwarding task that has been executed, and maintaining the vehicle information of a forwarding task that has not been executed. In other words, one or more second vehicles whose forwarding tasks are to be executed are determined. Subsequently, a forwarding task of each of the one or more second vehicles is executed based on the list of second vehicle information, and driving data of each second vehicle is forwarded to a data processing platform (such as a cloud platform) via multithreaded asynchronous forwarding in conjunction with a circular queue, such that the data processing platform performs the subsequent processing on the driving data. Further, the execution status of the forwarding task in the list of forwarding tasks is updated. In this way, the extracted driving data are stored and acquired efficiently, and the driving data are ensured to be forwarded to the data processing platform without repetitions or omissions.

Specifically, the method for forwarding data provided by the present disclosure is executed by an electronic device. The electronic device is a terminal, a server, or other devices in some embodiments, which is not limited in the present disclosure. The electronic device is communicatively connected to the data processing platform (in some embodiments, via a wired or wireless network connection). The data processing platform is a cloud platform that provides cloud computing services in some embodiments, such as a TSP (Telematics Service Provider) platform, which is not limited in the present disclosure.

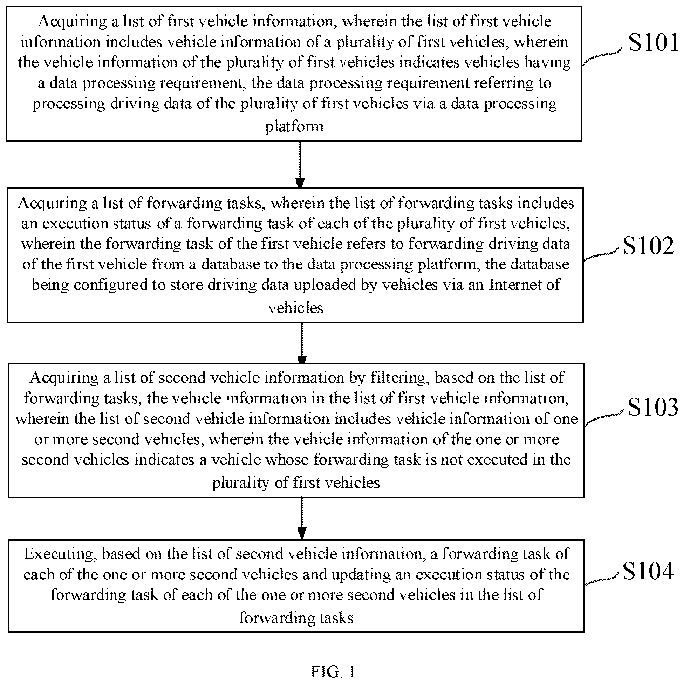

FIG. 1 is a flowchart of a method for forwarding data according to some embodiments of the present disclosure. As shown in FIG. 1, the method for forwarding data is executed by an electronic device and includes the following processes.

In process S101, a list of first vehicle information is acquired, wherein the list of first vehicle information includes vehicle information of a plurality of first vehicles, wherein the vehicle information of the plurality of first vehicles indicates vehicles having a data processing requirement, the data processing requirement referring to processing driving data of the plurality of first vehicles via a data processing platform.

The electronic device is able to access a first relational database (such as MySQL, Oracle, or the like), wherein the first relational database is configured to store a vehicle table including vehicle information of a plurality of vehicles. In some embodiments, the first relational database is deployed on the data processing platform or on the electronic device, which is not limited in the present disclosure. The vehicle information includes a vehicle identifier (such as a vin code, which is a vehicle identification number, i.e., a unique identifier of each vehicle), a vehicle type, a vehicle production date, etc. The specific content of the vehicle information is not limited in the present disclosure. In this process, the electronic device filters vehicle information satisfying a filtering condition from the first relational database and generates a list of first vehicle information based on the filtered vehicle information. The filtering condition includes that the vehicle has a data processing requirement. In some embodiments, whether a vehicle has a data processing requirement is determined based on a launch date of a target project. In some embodiments, the electronic device determines whether a vehicle has a data processing requirement based on the production date of the vehicle and the launch date of the target project, wherein the case that the production date of the vehicle is earlier than the launch date of the target project indicates the vehicle having a data processing requirement, and the vehicle is identified as a first vehicle. In some embodiments, the target project includes statistical analysis for vehicle driving data within region XX from year YY to year ZZ, etc., which is not limited in the present disclosure. Additionally, driving data of the vehicle includes, but is not limited to, driving directions, fuel consumption, driving duration of the vehicle, etc.

In some embodiments, upon filtering vehicle information of the plurality of first vehicles from the first relational database, the electronic device sorts the vehicle information of the plurality of first vehicles to acquire a list of first vehicle information. The list of first vehicle information is also referred to as vinList, i.e., an information list indexed by vehicle VIN codes. In some embodiments, the electronic device sorts the vehicle information of the plurality of first vehicles based on the production dates of the plurality of first vehicles to generate the list of first vehicle information. In some embodiments, the vehicle information of the plurality of first vehicles is sorted according to a sequence of the production dates from oldest to newest, which is not limited in the present disclosure.

Additionally, in some embodiments, a scheduled task is set in the embodiments of the present disclosure. In the case that a scheduled task 1 is triggered, vehicle information before the launch data of the target project is filtered from the vehicle table in the first relational database. The filtered vehicle information is then sorted to generate the data list vinList, i.e., the list of first vehicle information. In some embodiments, the electronic device receives a first scheduled task. The first scheduled task instructs to execute the forwarding task during a first time period, wherein the first time period refers to a time period in which a usage frequency of driving data is less than or equal to a first threshold. The forwarding task refers to forwarding driving data of the vehicle from the database to the data processing platform, such that the data processing platform performs subsequent processing on the driving data of the vehicle. The first time period is a predetermined time period that is configurable based on business requirements. In some embodiments, the first time period is from 0:00 a.m. to 6:00 a.m. The first threshold is a predetermined threshold that is configurable based on business requirements. In some embodiments, the first threshold is a data usage frequency of 10, which is not limited in the present disclosure.

In process S102, a list of forwarding tasks is acquired, wherein the list of forwarding tasks includes an execution status of a forwarding task of each of the plurality of first vehicles, wherein the forwarding task of the first vehicle refers to forwarding driving data of the first vehicle from a database to the data processing platform, the database being configured to store driving data uploaded by vehicles via an Internet of vehicles.

The electronic device is able to access a second relational database (such as MySQL, Oracle, etc.), which is configured to store the list of forwarding tasks. In some embodiments, the list of forwarding tasks is represented as "T_COMMERCIAL_TASK". In some embodiments, the second relational database is deployed on the data processing platform or on the electronic device, which is not limited in the present disclosure. For any forwarding task of a first vehicle, the execution status of the forwarding task includes at least one of: vehicle information of a vehicle corresponding to the forwarding task, a task type of the forwarding task, an execution status, an execution duration, an interruption time, an execution progress, or a cause of an anomalous execution, which is not limited in the present disclosure. In the present disclosure, the electronic device is able to access a database that is configured to store driving data, such as an HBase database. The driving data in the database is uploaded by vehicles via the Internet of vehicles. It is understood that the HBase database, due to its excellent read/write performance and support for tables including large-scale data, is suitable for serving as online databases handling data with massive volumes and simple services, and responsible for aggregating data from various business systems.

In process S103, a list of second vehicle information is acquired by filtering, based on the list of forwarding tasks, the vehicle information in the list of first vehicle information, wherein the list of second vehicle information comprises vehicle information of one or more second vehicles, wherein the vehicle information of the one or more second vehicles indicates a vehicle whose forwarding task is not executed in the plurality of first vehicles.

Specifically, the electronic device acquires the list of second vehicle information by filtering, based on the execution status of each forwarding task in the list of forwarding tasks, the vehicle information in the list of first vehicle information, removing vehicle information of a forwarding task that has been executed, and maintaining the vehicle information of a forwarding task that has not been executed. That is, the electronic device acquires the list of second vehicle information by removing data satisfying a removal condition in the list of first vehicle information based on the execution status of each forwarding task in the list of forwarding tasks, wherein the removal condition is a vin code of a forwarding task that has been executed in the first vehicle list.

In process S104, a forwarding task of each of the one or more second vehicles is executed based on the list of second vehicle information, and an execution status of the forwarding task of each of the one or more second vehicles is updated in the list of forwarding tasks.

For a plurality of second vehicles in the list of second vehicle information, the electronic device executing the forwarding tasks of the plurality of second vehicles includes: storing driving data of the one or more second vehicles from the database into a circular queue, and forwarding the driving data from the circular queue to the data processing platform via multithreaded asynchronous forwarding. In some embodiments, the circular queue is Disruptor, and the data writing and the data reading can be concurrently achieved using the circular queue. Based on the above, the electronic device creates a plurality of threads to asynchronously forward driving data from the circular queue to the data processing platform using the plurality of threads. In some embodiments, the number of the plurality of threads equals to the number of forwarding tasks of the plurality of second vehicles, thereby allowing one forwarding task to be assigned to one thread for execution. In some embodiments, the number of threads is greater than the number of forwarding tasks of the second vehicles. In this case, a single forwarding task is possibly assigned to multiple threads for execution (e.g., Thread A is responsible for forwarding a portion of driving data that needs to be forwarded in Forwarding Task 1, and Thread B is responsible for forwarding the remaining driving data), thereby enhancing data forwarding efficiency. The specific implementation manner for forwarding driving data via multithreaded asynchronous forwarding by the electronic device is not limited in the present disclosure.

In some embodiments, the electronic device determines whether the current task table includes an uncompleted forwarding task; and in the case that the current task table includes an uncompleted forwarding task, locates a last execution node and resumes the execution of the uncompleted task based on the last execution node until the current task table does not include any uncompleted tasks. That is, in the case that the list of forwarding tasks includes a first forwarding task, the execution of the first forwarding task is resumed based on the execution progress of the first forwarding task in the list of forwarding tasks until the first forwarding task is successfully completed, wherein the first forwarding task refers to a forwarding task that experienced an execution interruption. In some embodiments, the electronic device determines whether the current task table includes an uncompleted task; and in the case that the current task table includes an uncompleted task, locates a last execution node (i.e., execution progress, e.g., the driving data that is to be forwarded includes ABC and the execution progress indicates the last execution node was A) based on the VIN code (i.e., vehicle information) and a stop time (i.e., task interruption time) and resumes the execution of the uncompleted task based on the last execution node to achieve resuming from a breakpoint, until the current task table does not include any uncompleted task. In the case that the current task table does not include any uncompleted task, driving data of a vehicle (i.e., history message data on the Internet of vehicles) is extracted from the Hbase database based on the list of second vehicle information, the extracted driving data is stored into a circular queue and parsed, and then the driving data is forwarded to the data processing data via multithreaded asynchronous forwarding, such that the data processing data performs subsequent processing, and the task execution status is persisted into the current task table based on the parsed driving data, i.e., the execution status of the forwarding task of each second vehicle is updated in the list of forwarding tasks.

In some embodiments, the electronic device first determines whether the current task table includes an uncompleted forwarding task; in the case that the current task table includes an uncompleted forwarding task, first executes the uncompleted forwarding task; and in the case that the current task table does not include any uncompleted task, executes the forwarding task of the second vehicle instructed in the list of second vehicle information. In some embodiments, a predetermined extraction strategy is performed and a multithreaded method is applied, in which one vin code corresponds to one forwarding task, and the extraction is performed based on vin+vehicle type+production time+pagination until the launch date of the target project. Specifically, the history message data on the Internet of vehicles is extracted from the Hbase database, the data within a predetermined time period is queried by pagination using javaApi, the extracted data is stored into a circular queue Disruptor and concurrently read and wrote, the read data is parsed and forwarded to the tsp platform kafka using the multithreaded asynchronous method, and then the execution status of the task is persisted into the task table.

In some embodiments, in a case that the list of forwarding tasks comprises a second forwarding task, the electronic device compensates for the second forwarding task based on the cause of an anomalous execution of the second forwarding task in the list of forwarding tasks, wherein the second forwarding task refers to a forwarding task that has experienced an anomalous execution. In some embodiments, the cause of anomalous execution includes a mismatch between the driving data that is to be forwarded and the driving data that has been forwarded. In some embodiments, one forwarding task is able to forward 10GB of driving data, and in the case that the driving data of a second vehicle has a volume of 12GB, only 10GB of driving data is forwarded by executing the forwarding task of the second vehicle, resulting in an anomalous execution. In this case, the remaining 2GB of driving data is forwarded compensatorily. The compensating process is performed artificially or automatically, which is not limited in the present disclosure.

Additionally, in some embodiments, a scheduled task is set. In the case that Scheduled task 2 is triggered, the execution of the forwarding task is stopped. In some embodiments, the electronic device determines whether a predetermined sleep instruction is received; and in the case of receiving the predetermined sleep instruction, stops the extraction of the history message data on the Internet of vehicles from the hbase. In some embodiments, the electronic device receives a second scheduled task, wherein the second scheduled task instructs not to execute the forwarding task during a second time period, the second time period referring to a time period in which the usage frequency of the driving data is greater than a second threshold. The second time period is a predetermined time period, which is configurable according to business requirements. In some embodiments, the second time period is from 7:00 to 23:00. The second threshold is a predetermined threshold, which is configurable according to business requirements. In some embodiments, the second threshold is a data usage frequency of 10, which is not limited in the present disclosure. Specifically, the present disclosure executes the forwarding task in a predetermined time period based on a sleep strategy, so as to avoid the data usage peak, and the present disclosure is able to achieve resuming from a breakpoint based on the execution status of each forwarding task in the list of forwarding tasks. Specifically, in the case that the predetermined sleep instruction is received, the sleep strategy is performed to stop the execution of the forwarding task in the form of a thread notification, and the thread pool is closed in the case that all data that has been stored in the queue is completely processed. In some embodiments, in the case that the predetermined sleep instruction is received, the method further includes: compensating for the anomalous term in the current task table based on a predetermined compensation strategy. That is, in the case that the sleep instruction is received and the list of forwarding tasks includes a second forwarding task, the second forwarding task is compensated for based on the cause of the anomalous execution of the second forwarding task in the list of forwarding tasks.

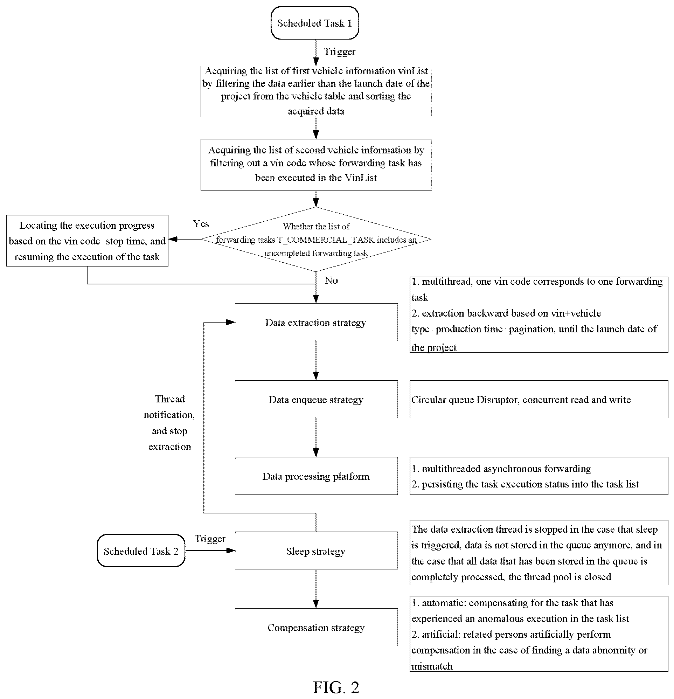

Referring to FIG. 2, the above method for forwarding data is described by an example. FIG. 2 is a flowchart of another method for forwarding data according to some embodiments of the present disclosure.

As shown in FIG. 2, in the case that Scheduled task 1 is triggered (i.e., receiving the first scheduled task), the list of first vehicle information vinList is acquired by filtering the data of vehicles with a production date earlier than the launch date of the target project from the Vehicle table and sorting the acquired data. The list of second vehicle information is acquired by filtering out a vin code whose forwarding task has been executed in the VinList. It is determined whether the list of forwarding tasks T_COMMERCIAL_TASK includes an uncompleted forwarding task; in the case of YES, the last execution node (i.e., execution progress) is located based on the vin code+stop time, and the execution of the task is resumed, thereby achieving resuming from a breakpoint; and in the case of NO, the forwarding task of the second vehicle is executed, for which the multithreaded method is adopted. Specifically, one vin code corresponds to one task, and driving data are extracted from Hbase database backward based on vin+vehicle type+production time+pagination, until the launch time of the target project; the extracted driving data is put into the circular queue Disruptor based on a data enqueue strategy and concurrently read and wrote, and the driving data in the circular queue is parsed and forwarded to the tsp platform kafka via multithreaded asynchronous forwarding; and the execution status of the task is persisted into the list of forwarding tasks.

In the case that Scheduled task 2 is triggered (i.e., receiving the second scheduled task), the sleep strategy is performed to stop the execution of the forwarding task in the form of a thread notification (i.e., stopping extracting driving data from the Hbase database) and close the thread pool in the case that all data in the queue are completely processed; and the compensation for the forwarding task that has experienced an anomalous execution in the list of forwarding tasks is triggered based on the automatic compensation strategy after the sleep strategy is performed. The sleep strategy means that the data extraction thread is stopped in the case that sleep is triggered, data is not stored in the queue anymore, and in the case that all data that has been stored in the queue is completely processed, the thread pool is closed. The compensation strategy includes automatic compensation and artificial compensation, wherein the automatic compensation means that the electronic device compensates for the task that has experienced an anomalous execution in the task list, and the artificial compensation means that related persons (such as big data workers) artificially perform compensation in the case of finding a data abnormity or mismatch.

Referring to Table 1 below, the aforementioned list of forwarding tasks is described by an example. Table 1 is a list of forwarding tasks provided by some embodiments. In the embodiments of the present disclosure, the electronic device is able to record the execution status of forwarding tasks into the T_COMMERCIAL_TASK of the second relational database MySQL via the data processing platform.

**Table 1**

| Table name | Vehicle History Dynamic Data Extraction Task Table | | Table ID | T_COMMERCIAL_TASK |
|---|---|---|---|---|
| No. | Field | Description | Type | Comment |
| 1 | ID | Primary Key | BIGINT(19) | |
| 2 | VIN | Vehicle Identification Number | VARCHAR(20) | |
| 3 | STATE | Task Execution Status | INT(1) | 0 Failure 1 Suspending 2 Executing 3 Success |
| 4 | TASKTYPE | Task Type | INT(1) | 0 Normal 1 Compensate |
| 5 | STOPTIME | Stop Time | BIGINT(15) | Timestamp in millisecond level, for resuming from a breakpoint |
| 6 | TASKNAME | Task Name | VARCHAR(20) | VIN+TASKTYPE+TASKNAME |
| | | | | Unique, be able to correspond to different tables (new energy/fuel vehicle) |
| 7 | AMOUNT | Number of Compensations | INT(4) | |
| 8 | TASKTIME | Task execution duration | DATETIME | |
| 9 | ERRORINFO | Cause of Failure | VARCHAR(1000) | Intercepting in case of a data length exceeding a threshold, and leaving the field blank in case of successful compensation |

VIN in field No. 2 represents the vehicle identification number, i.e., a unique identifier for each vehicle, also known as the vehicle identification. In the task execution status STATE of forwarding tasks, "0 Failure" indicates an anomalous execution has occurred, "1 Suspending" indicates an execution interruption has occurred, "2 Executing" indicates the forwarding task is currently being executed, and "3 Success" indicates the forwarding task has been executed. Thus, based on the field of STATE, forwarding tasks that have been executed are able to be filtered out quickly, and the current task conditions are viewed. In the task type of the forwarding task, "0 Normal" indicates that the execution of the current task is normal, and "1 Compensate" indicates that the current task is being compensated currently. In some embodiments, based on the field of STOPTIME (i.e., stop time), a last execution node is located, i.e., the execution progress is determined, thereby achieving resuming from a breakpoint. Based on the field of ERRORINFO (i.e., cause of an anomalous execution), the forwarding tasks are able to be compensated.

In summary, according the method for forwarding data provided by the embodiments of the present disclosure, first vehicles having a data processing requirement are determined by acquiring a list of first vehicle information, and an execution status of a forwarding task of each of the first vehicles is determined by acquiring a list of forwarding tasks, such that a list of second vehicle information is acquired by filtering the vehicle information in the list of first vehicle information, removing vehicle information of a forwarding task that has been executed, and maintaining the vehicle information of a forwarding task that has not been executed. In other words, one or more second vehicles whose forwarding tasks are to be executed are determined. Subsequently, a forwarding task of each of the one or more second vehicles is executed based on the list of second vehicle information, and vehicle data of each second vehicle is forwarded to a data processing platform (such as a cloud platform) via multithreaded asynchronous forwarding in conjunction with a circular queue, such that the data processing platform performs the subsequent processing on the vehicle data. Further, the execution status of the forwarding task in the list of forwarding tasks is updated. In this way, the extracted driving data are stored and acquired efficiently, and the driving data are ensured to be forwarded to the data processing platform without repetitions or omissions. That is, vehicle information that satisfies a filter condition is filtered from the predetermined first relational database, and the list of first vehicle information is generated based on the filtered vehicle information. The list of second vehicle information is acquired by removing the data satisfying a removal condition in the list of first vehicle information. It is determined whether the current list of forwarding tasks includes an uncompleted task. In the case that the current list of forwarding tasks does not include any uncompleted task, the history message data on the Internet of vehicles is extracted form hbase based on the list of second vehicle information and the predetermined extraction strategy, and the history message data is stored into a predetermined circular queue, parsed and forwarded to the data processing platform using the predetermined multithreaded asynchronous forwarding method, such that the data processing platform persists the task execution status into the current list of forwarding tasks based on the parsed history message data. In this way, the present disclosure solves the problems in the data synchronizing process, such as duplicate data extraction, data loss, complex processes, low forwarding efficiency, and the inability to resume from a breakpoint. The repetition or omission of the extracted data is avoided, and the extracted data is stored and read efficiently. In addition, the task is extracted in a predetermined time period, such that the data usage peak is avoided.

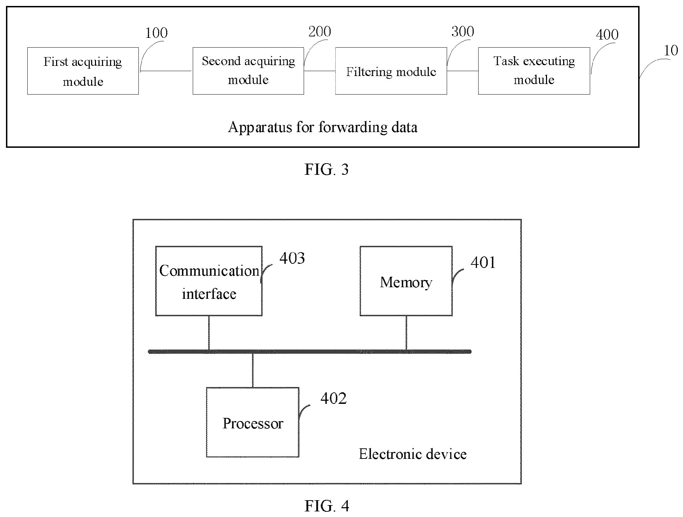

Second, with reference to FIG. 3, an apparatus for forwarding data provided by some embodiments of the present disclosure is described. FIG. 3 is a block diagram of an apparatus for forwarding data according to some embodiments of the present disclosure.

As shown in FIG. 3, the apparatus for forwarding data 10 includes: a first acquiring module 100, a second acquiring module 200, a filtering module 300, and a task executing module 400.

The first acquiring module 100 is configured to acquire a list of first vehicle information, wherein the list of first vehicle information includes vehicle information of a plurality of first vehicles, wherein the vehicle information of the plurality of first vehicles indicates vehicles having a data processing requirement, the data processing requirement referring to processing driving data of the plurality of first vehicles via a data processing platform.

The second acquiring module 200 is configured to acquire a list of forwarding tasks, wherein the list of forwarding tasks includes an execution status of a forwarding task of each of the plurality of first vehicles, wherein the forwarding task of the first vehicle refers to forwarding driving data of the first vehicle from a database to the data processing platform, the database being configured to store driving data uploaded by vehicles via an Internet of vehicles.

The filtering module 300 is configured to acquire a list of second vehicle information by filtering, based on the list of forwarding tasks, the vehicle information in the list of first vehicle information, wherein the list of second vehicle information includes vehicle information of one or more second vehicles, wherein the vehicle information of the one or more second vehicles indicates a vehicle whose forwarding task is not executed in the plurality of first vehicles.

The task executing module 400 is configured to execute, based on the list of second vehicle information, a forwarding task of each of the one or more second vehicles and update an execution status of the forwarding task of each of the one or more second vehicles in the list of forwarding tasks, wherein executing forwarding task of each of the one or more second vehicles includes: storing driving data of the one or more second vehicles from the database into a circular queue, and forwarding the driving data from the circular queue to the data processing platform via multithreaded asynchronous forwarding.

In some embodiments, the execution status of the forwarding task includes an execution progress of the forwarding task, and the task executing module is further configured to: in a case that the list of forwarding tasks includes a first forwarding task, continue to execute the first forwarding task based on an execution progress of the first forwarding task in the list of forwarding tasks until the first forwarding task is successfully executed, wherein the first forwarding task refers to a forwarding task that has experienced an execution interruption.

In some embodiments, the execution status of the forwarding task includes a cause of an anomalous execution of the forwarding task, and the task executing module is further configured to: in a case that the list of forwarding tasks includes a second forwarding task, compensate for the second forwarding task based on a cause of an anomalous execution of the second forwarding task in the list of forwarding tasks, wherein the second forwarding task refers to a forwarding task that has experienced an anomalous execution.

In some embodiments, the apparatus further includes a receiving module, configured to perform at least one of:
receiving a first scheduled task, wherein the first scheduled task instructs to execute the forwarding task during a first time period, the first time period referring to a time period in which a usage frequency of the driving data is less than or equal to a first threshold; and
receiving a second scheduled task, wherein the second scheduled task instructs not to execute the forwarding task during a second time period, the second time period referring to a time period in which the usage frequency of the driving data is greater than a second threshold.

In some embodiments, the execution status of the forwarding task includes at least one of: vehicle information of a vehicle corresponding to the forwarding task, a task type of the forwarding task, an execution status, an execution duration, an interruption time, an execution progress, or a cause of an anomalous execution.

It should be noted that the aforementioned explanations regarding the embodiments of the method for forwarding data also apply to the apparatus for forwarding data of this embodiment and are not repeated herein.

According to the apparatus for forwarding data in the embodiments of the present disclosure, first vehicles having a data processing requirement are determined by acquiring a list of first vehicle information, and an execution status of a forwarding task of each of the first vehicles is determined by acquiring a list of forwarding tasks, such that a list of second vehicle information is acquired by filtering the vehicle information in the list of first vehicle information, removing vehicle information of a forwarding task that has been executed, and maintaining the vehicle information of a forwarding task that has not been executed. In other words, one or more second vehicles whose forwarding tasks are to be executed are determined. Subsequently, a forwarding task of each of the one or more second vehicles is executed based on the list of second vehicle information, and vehicle data of each second vehicle is forwarded to a data processing platform (such as a cloud platform) via multithreaded asynchronous forwarding in conjunction with a circular queue, such that the data processing platform performs the subsequent processing on the vehicle data. Further, the execution status of the forwarding task in the list of forwarding tasks is updated. In this way, the extracted driving data are stored and acquired efficiently, and the driving data are ensured to be forwarded to the data processing platform without repetitions or omissions.

FIG. 4 is a structural diagram of an electronic device according to some embodiments of the present disclosure. In some embodiments, the electronic device includes:
a memory 401, a processor 402, and a computer program stored on the memory 401 and runnable on the processor 402.

The processor 402, when running the program, is caused to perform the method for forwarding data provided in the above embodiments.

Further, the electronic device further includes:
a communication interface 403, configured to achieve the communication between the memory 401 and the processor 402.

The memory 401 is configured to store the computer program runnable on the processor 402.

In some embodiments, the memory 401 includes high-speed RAM (Random Access Memory) storage or further includes a non-transitory memory, such as at least one disk storage.

In the case that the memory 401, the processor 402, and the communication interface 403 are implemented independently, the communication interface 403, the memory 401, and the processor 402 are interconnected via a bus to achieve communication among them. In some embodiments, the bus is an industry standard architecture (ISA) bus, a peripheral component interconnect (PCI) bus, an extended industry standard architecture (EISA) bus, or the like. In some embodiments, the buses are classified into address buses, data buses, control buses, or the like. For ease of representation, FIG. 4 shows only a single thick line, but this does not imply that there is only one bus or only one type of bus.

In some embodiments, in specific implementations, in the case that the memory 401, the processor 402, and the communication interface 403 are integrated onto a single chip, communication between the memory 401, the processor 402, and the communication interface 403 is accomplished via internal interfaces.

In some embodiments, the processor 402 is a central processing unit (CPU), an application-specific integrated circuit (ASIC), or one or more integrated circuits configured to implement one or more embodiments of the present disclosure.

The present disclosure further provides a computer-readable storage medium storing a computer program. The computer program, when executed by a processor, causes the processor to perform the method for forwarding data described above.

In the description of the specification, the terms "an embodiment," "some embodiments," "example," "specific example," or "some examples" refer to the specific features, structures, materials, or characteristics described in conjunction with such embodiments or examples being included in at least one embodiment or example of the present disclosure. In the specification, the illustrative descriptions using the above terms are not necessarily directed to the same embodiment or example. Furthermore, the specific features, structures, materials, or characteristics described can be appropriately combined in any one or more embodiments or examples. Additionally, on the premise of no contradiction, those skilled in the art can combine and integrate the different embodiments or examples described in this specification or the features of different embodiments or examples.

Furthermore, the terms "first" and "second" are used merely for descriptive purposes and should not be interpreted as indicating or implying relative importance or the number of technical features indicated. Accordingly, features defined by "first" or "second" explicitly or implicitly mean that there are one or more such features. In the description of the present disclosure, "N" means at least two, such as two or more, unless otherwise explicitly specified.

Any process or method described in the flowchart or otherwise herein can be understood as a module, segment or portion of code including one or more executable instructions for implementing a specific logic function or process, and the scope of the preferred embodiments of the present disclosure includes other implementations where the functions can be performed in a different order from that shown or discussed, including in a substantially simultaneous manner or in reverse order, according to the involved functions, as would be understood by those skilled in the art to which the embodiments of the present disclosure pertain.

It should be understood that the various parts of the present disclosure can be implemented by hardware, software, firmware, or any combination thereof. In the above embodiments, the N processes or methods can be implemented by software or firmware stored in memory and executed by a suitable instruction execution system. In some embodiments, in the case of being implemented in hardware as in another embodiment, the present disclosure can be implemented by any one or combination of the following technologies known in the art: discrete logic circuits with logic gates for implementing logic functions on data signals, application-specific integrated circuits with appropriate combinational logic gates, programmable gate arrays, field programmable gate arrays, etc..

Those skilled in the art will appreciate that all or part of the processes included in the methods of the above embodiments may be performed by instructing relevant hardware through a program. Said program may be stored on a computer-readable storage medium, and when executed, includes one or a combination of the processes of the method embodiments.

Although embodiments of the present disclosure have been shown and described, those skilled in the art can understand that the above embodiments are illustrative and not intended to limit the present disclosure. Those skilled in the art can make various changes, modifications, substitutions, and variations within the scope of the present disclosure.

## Claims

1. A method for forwarding data, comprising:
acquiring a list of first vehicle information, wherein the list of first vehicle information comprises vehicle information of a plurality of first vehicles, wherein the vehicle information of the plurality of first vehicles indicates vehicles having a data processing requirement, the data processing requirement referring to processing driving data of the plurality of first vehicles via a data processing platform;
acquiring a list of forwarding tasks, wherein the list of forwarding tasks comprises an execution status of a forwarding task of each of the plurality of first vehicles, wherein the forwarding task of the first vehicle refers to forwarding driving data of the first vehicle from a database to the data processing platform, the database being configured to store driving data uploaded by vehicles via an Internet of vehicles;
acquiring a list of second vehicle information by filtering, based on the list of forwarding tasks, the vehicle information in the list of first vehicle information, wherein the list of second vehicle information comprises vehicle information of one or more second vehicles, wherein the vehicle information of the one or more second vehicles indicates a vehicle whose forwarding task is not executed in the plurality of first vehicles; and
executing, based on the list of second vehicle information, a forwarding task of each of the one or more second vehicles and updating an execution status of the forwarding task of each of the one or more second vehicles in the list of forwarding tasks; wherein executing forwarding task of each of the one or more second vehicles comprises: storing driving data of the one or more second vehicles from the database into a circular queue, and forwarding the driving data from the circular queue to the data processing platform via multithreaded asynchronous forwarding.

2. The method according to claim 1, wherein the execution status of the forwarding task comprises an execution progress of the forwarding task; and the method further comprises:
in a case that the list of forwarding tasks comprises a first forwarding task, continuing to execute the first forwarding task based on an execution progress of the first forwarding task in the list of forwarding tasks until the first forwarding task is successfully executed, wherein the first forwarding task refers to a forwarding task that has experienced an execution interruption.

3. The method according to claim 1, wherein the execution status of the forwarding task comprises a cause of an anomalous execution of the forwarding task; and the method further comprises:
in a case that the list of forwarding tasks comprises a second forwarding task, compensating for the second forwarding task based on a cause of an anomalous execution of the second forwarding task in the list of forwarding tasks, wherein the second forwarding task refers to a forwarding task that has experienced an anomalous execution.

4. The method according to claim 1, further comprising at least one of:
receiving a first scheduled task, wherein the first scheduled task instructs to execute the forwarding task during a first time period, the first time period referring to a time period in which a usage frequency of the driving data is less than or equal to a first threshold; and
receiving a second scheduled task, wherein the second scheduled task instructs not to execute the forwarding task during a second time period, the second time period referring to a time period in which the usage frequency of the driving data is greater than a second threshold.

5. The method according to claim 1, wherein the execution status of the forwarding task comprises at least one of: vehicle information of a vehicle corresponding to the forwarding task, a task type of the forwarding task, an execution status, an execution duration, an interruption time, an execution progress, or a cause of an anomalous execution.

6. An apparatus for forwarding data, comprising:
a first acquiring module, configured to acquire a list of first vehicle information, wherein the list of first vehicle information comprises vehicle information of a plurality of first vehicles, wherein the vehicle information of the plurality of first vehicles indicates vehicles having a data processing requirement, the data processing requirement referring to processing driving data of the plurality of first vehicles via a data processing platform;
a second acquiring module, configured to acquire a list of forwarding tasks, wherein the list of forwarding tasks comprises an execution status of a forwarding task of each of the plurality of first vehicles, wherein the forwarding task of the first vehicle refers to forwarding driving data of the first vehicle from a database to the data processing platform, the database being configured to store driving data uploaded by vehicles via an Internet of vehicles;
a filtering module, configured to acquire a list of second vehicle information by filtering, based on the list of forwarding tasks, the vehicle information in the list of first vehicle information, wherein the list of second vehicle information comprises vehicle information of one or more second vehicles, wherein the vehicle information of the one or more second vehicles indicates a vehicle whose forwarding task is not executed in the plurality of first vehicles; and
a task executing module, configured to execute, based on the list of second vehicle information, a forwarding task of each of the one or more second vehicles and update an execution status of the forwarding task of each of the one or more second vehicles in the list of forwarding tasks; wherein executing forwarding task of each of the one or more second vehicles comprises: storing driving data of the one or more second vehicles from the database into a circular queue, and forwarding the driving data from the circular queue to the data processing platform via multithreaded asynchronous forwarding.

7. The apparatus according to claim 6, wherein the execution status of the forwarding task comprises an execution progress of the forwarding task; and the task executing module is further configured to:
in a case that the list of forwarding tasks comprises a first forwarding task, continue to execute the first forwarding task based on an execution progress of the first forwarding task in the list of forwarding tasks until the first forwarding task is successfully executed, wherein the first forwarding task refers to a forwarding task that has experienced an execution interruption.

8. The apparatus according to claim 6, wherein the execution status of the forwarding task comprises a cause of an anomalous execution of the forwarding task; and the task executing module is further configured to:
in a case that the list of forwarding tasks comprises a second forwarding task, compensate for the second forwarding task based on a cause of an anomalous execution of the second forwarding task in the list of forwarding tasks, wherein the second forwarding task refers to a forwarding task that has experienced an anomalous execution.

9. An electronic device, comprising: a memory, a processor, and a computer program stored on the memory and runnable on the processor, wherein the processor, when running the program, is caused to perform the method for forwarding data as defined in any one of claims 1 to 5.

10. A computer-readable storage medium, storing a computer program, wherein the program, when run by a processor, causes the processor to perform the method for forwarding data as defined in any one of claims 1 to 5.
